# EUROPÄISCHE PATENTSCHRIFT

(11) **EP 1 345 789 B1**
(45) Veröffentlichungstag und Bekanntmachung des Hinweises auf die Patenterteilung: **10.11.2004**
(21) Anmeldenummer: 01991764.0
(22) Anmeldetag: 28.11.2001
(51) Int. Cl.: B60K 15/077

(54) **VORRICHTUNG ZUM FÖRDERN VON KRAFTSTOFF AUS EINEM VORRATSBEHÄLTER ZU EINER BRENNKRAFTMASCHINE**
DEVICE FOR TRANSPORTING FUEL FROM A RESERVOIR TO AN INTERNAL COMBUSTION ENGINE
DISPOSITIF POUR L'ACHEMINEMENT DE CARBURANT D'UN RESERVOIR A UN MOTEUR A COMBUSTION INTERNE

(30) Priorität: 05.12.2000 DE 10060293
(43) Veröffentlichungstag der Anmeldung: 24.09.2003
(73) Patentinhaber: ROBERT BOSCH GMBH, 70442 Stuttgart (DE)
(72) Erfinder: BRAUN, Hans-Peter, 72172 Renfrizhausen (DE); WOERZ, Stefan, 71665 Vaihingen (DE); WIELAND, Thomas, 70193 Stuttgart (DE); AST, Christian, BR-13026 060 Campinas-SP (BR)
(86) Internationale Anmeldenummer: PCT/EP2001/013920
(87) Internationale Veröffentlichungsnummer: WO 2002/045988

(56) Entgegenhaltungen:
- DE-A- 4 219 516

## Beschreibung

### Stand der Technik

Die Erfindung geht aus von einer Vorrichtung zum Fördern von Kraftstoff aus einem Vorratsbehälter zu einer Brennkraftmaschine nach der Gattung des Anspruchs 1.

Eine solche Vorrichtung ist durch die DE 42 19 516 A1 bekannt. Diese Vorrichtung weist einen im Vorratsbehälter angeordneten Staubehälter auf, aus dem ein Förderaggregat Kraftstoff ansaugt und zur Brennkraftmaschine fördert. Die Vorrichtung weist außerdem eine Strahlpumpe auf, durch die Kraftstoff aus dem Vorratsbehälter in den Staubehälter gefördert wird. Die Strahlpumpe ist nahe einem Boden des Staubehälters angeordnet und fördert durch eine vom Boden des Staubehälters bis in den Bereich von dessen oberem Rand verlaufende Steigleitung Kraftstoff in den Staubehälter. Die Steigleitung ist dabei einstückig am Staubehälter ausgebildet, was dessen Herstellung erschwert und ein aufwendiges Werkzeug erfordert. Am oberen Ende der Steigleitung ist eine Umlenkvorrichtung angeordnet, durch die aus der Steigleitung austretender Kraftstoff in den Staubehälter geleitet wird. Diese Umlenkvorrichtung kann nicht einstückig am Staubehälter ausgebildet werden sondern muß als separates Teil am Staubehälter angeordnet werden, was den Montageaufwand erhöht.

### Vorteile der Erfindung

Die erfindungsgemäße Vorrichtung mit den Merkmalen gemäß Anspruch 1 hat demgegenüber den Vorteil, daß die Steigleitung durch das Verbinden des separaten Bauteils mit dem Staubehälter gebildet wird, die jeweils auf einfache Weise und mit einfachen Werkzeugen herstellbar sind.

In den abhängigen Ansprüchen sind vorteilhafte Ausgestaltungen und Weiterbildungen der erfindungsgemäßen Vorrichtung angegeben. Die Weiterbildung gemäß Anspruch 2 stellt sicher, daß aus der Steigleitung austretender Kraftstoff in den Staubehälter gelangt, wobei die Umlenkvorrichtung gemäß Anspruch 3 auf einfache Weise einstückig am Bauteil angeformt sein kann. Die Ausbildung gemäß Anspruch 4 oder 5 ermöglicht eine einfache Befestigung des Bauteils am Staubehälter.

### Zeichnung

Ein Ausführungsbeispiel der Erfindung ist in der Zeichnung dargestellt und in der nachfolgenden Beschreibung näher erläutert. Es zeigen Figur 1 eine Vorrichtung zum Fördern von Kraftstoff aus einem Vorratsbehälter zu einer Brennkraftmaschine in schematischer Darstellung, Figur 2 einen Staubehälter der Vorrichtung in vergrößerter Darstellung in einem Längsschnitt und Figur 3 den Staubehälter ausschnittsweise in einer perpektivischen Darstellung.

### Beschreibung des Ausführungsbeispiels

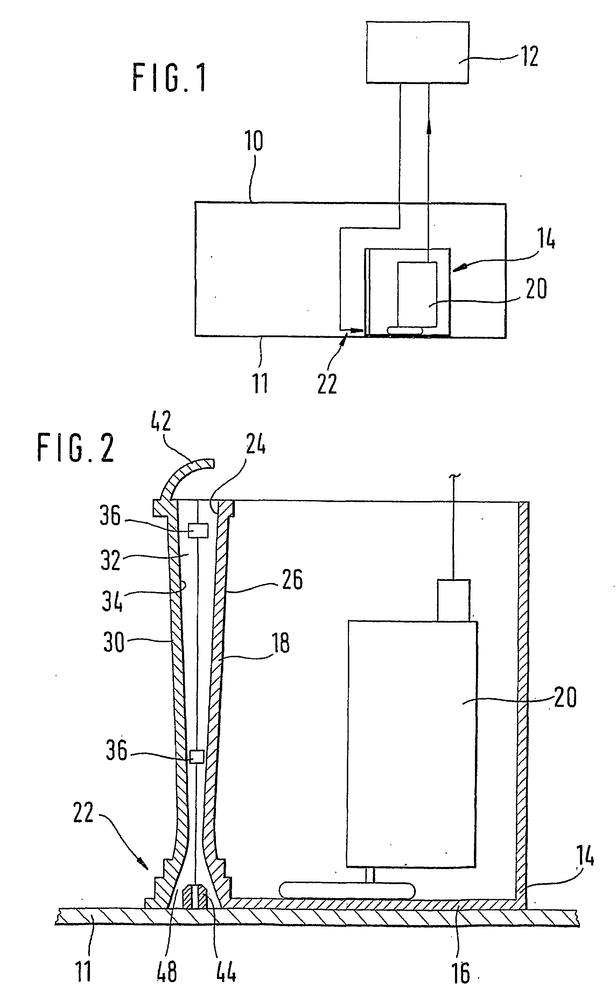

In den Figuren 1 bis 3 ist eine Vorrichtung zum Fördern von Kraftstoff aus einem Vorratsbehälter 10 zu einer Brennkraftmaschine 12 eines Kraftfahrzeugs dargestellt. Im Vorratsbehälter 10 ist ein topfförmiger Staubehälter 14 angeordnet, der gegenüber dem Vorratsbehälter 10 ein wesentlich geringeres Volumen besitzt. Der Staubehälter 14 weist einen Boden 16 und eine Umfangswand 18 auf. Der Staubehälter 14 sitzt mit seinem Boden 16 auf dem Boden 11 des Vorratsbehälters 10 auf. Der Staubehälter 14 kann an seinem oberen Ende offen oder geschlossen ausgebildet sein. Im Staubehälter 14 ist ein Förderaggregat 20 angeordnet, das einen elektrischen Antriebsmotor und einen Pumpenteil aufweist und das Kraftstoff aus dem Staubehälter 14 ansaugt und zur Brennkraftmaschine 12 fördert. Außerdem ist eine Strahlpumpe 22 vorgesehen, durch die Kraftstoff aus dem Vorratsbehälter 10 in den Staubehälter 14 gefördert wird. Durch die Strahlpumpe 22 wird sichergestellt, daß im Staubehälter 14 auch bei geringem Füllstand im Vorratsbehälter 10 ein ausreichendes Kraftstoffvolumen vorhanden ist, aus dem das Förderaggregat 20 ansaugen kann.

Die Strahlpumpe 22 ist nahe dem Boden 16 des Staubehälters 14 und nahe dem Boden 11 des Vorratsbehälters 10 angeordnet. Der Staubehälter 14 weist an der Außenseite seiner Umfangswand 18 eine beispielsweise etwa vertikal verlaufende, nach außen offene Rinne 24 auf. Die Rinne 24 kann im Querschnitt etwa teilkreisförmig, beispielsweise halbkreisförmig ausgebildet sein. Der Querschnitt der Rinne 24 vergrößert sich zu deren unterem Ende hin stark. Zum oberen Ende hin kann sich der Querschnitt der Rinne 24 ebenfalls allmählich vergrößern oder konstant bleiben. Durch die Rinne 24 ist an der Umfangswand 18 eine in das Innere des Staubehälters 14 gerichtete Ausbuchtung 26 gebildet. Der Staubehälter 14 kann aus Kunststoff bestehen und durch Spritzgießen in einem Spritzgießwerkzeug hergestellt werden. Dabei kann die offene Rinne 24 auf einfache Weise in der Umfangswand 18 geformt werden. Alternativ kann der Staubehälter 14 auch beispielsweise aus Metall bestehen und durch Umformen hergestellt werden, wobei dabei ebenfalls die offene Rinne 24 einfach bei der Herstellung des Staubehälters 14 geformt werden kann.

Mit dem Staubehälter 14 ist ein außerhalb von diesem angeordnetes separates Bauteil 30 verbindbar, durch das die Rinne 24 in der Außenseite der Umfangswand 18 abgedeckt und ein geschlossener Kanal 32 entsteht, der eine Steigleitung bildet. Das Bauteil 30 kann in seiner der Umfangswand 18 zugewandten Seite ebenfalls eine offene Rinne 34 aufweisen, die im Querschnitt zumindest annähernd gleich ausgebildet ist wie die Rinne 24 der Umfangswand 18 des Staubehälters 14. Das Bauteil 30 ist dicht mit der Umfangswand 18 des Staubehälters 14 verbunden, so daß die geschlossene Steigleitung 32 gebildet wird, die im Querschnitt beispielsweise kreisförmig ausgebildet ist. Der Querschnitt der Rinne 34 und damit insgesamt der Querschnitt der Steigleitung 32 vergrößert sich nach unten und nach oben wie vorstehend zu der Rinne 24 beschrieben. Es kann auch vorgesehen sein, daß im Bauteil 30 keine Rinne 34 ausgebildet ist und durch dieses zur Bildung der geschlossenen Steigleitung 32 nur die Rinne 24 der Umfangswand 18 abgedeckt wird. Außerdem kann auch vorgesehen sein, daß nur im Bauteil 30 die Rinne 34 ausgebildet ist und in der Umfangswand 18 des Staubehälters 14 keine Rinne ausgebildet ist und durch die Umfangswand 18 bei der Verbindung mit dem Bauteil 30 dessen Rinne 34 zur Bildung der geschlossenen Steigleitung 32 abgedeckt wird.

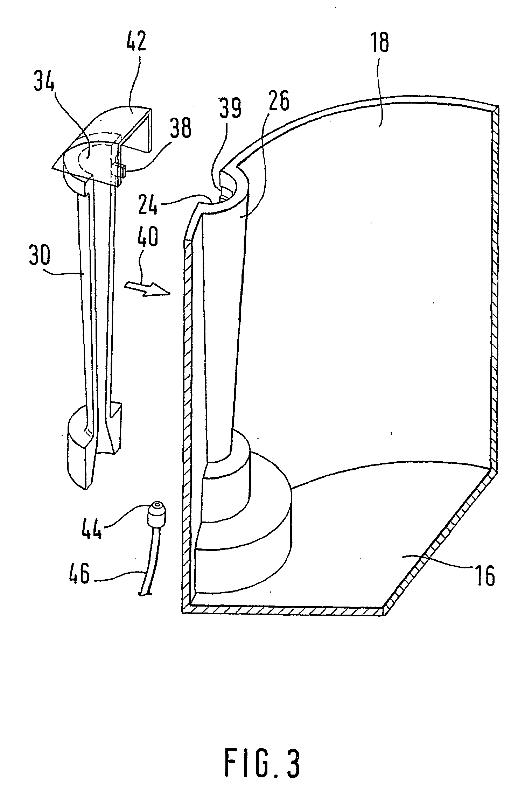

Das Bauteil 30 besteht vorzugsweise aus demselben Material wie der Staubehälter 14, also beispielsweise aus Kunststoff oder Metall und kann durch Spritzgießen oder Umformen hergestellt werden. Die Befestigung des Bauteils 30 an der Umfangswand 18 des Staubehälters 14 kann beispielsweise mittels wenigstens einer Rastverbindung 36 erfolgen. Am Bauteil 30 können dabei mehrere federnde Rastarme 38 angeformt sein, die an entsprechenden Raststellen 39 an der Umfangswand 18 einrastbar sind. Die Rastarme 38 können auch an der Umfangswand 18 angeordnet sein und die Raststellen 39 entsprechend am Bauteil 30. Zur Befestigung braucht das Bauteil 30 nur senkrecht zur Umfangwand 18 von außen an diese gemäß Pfeil 40 in Figur 3 angesetzt zu werden, wobei die Rastarme 38 einrasten. Alternativ kann das Bauteil 30 beispielsweise auch durch Verschweißen oder Verkleben an der Umfangswand 18 des Staubehälters 14 dicht befestigt werden.

Am Bauteil 30 kann an dessen oberem Endbereich eine Umlenkvorrichtung 42 angeordnet sein, durch die aus der Steigleitung 32 austretender Kraftstoff in den Staubehälter 14 geleitet wird. Die Umlenkvorrichtung 42 ist als eine Haube ausgebildet, die die Mündung der Steigleitung 32 auf deren außerhalb des Staubehälters 14 liegendem Bereich überdeckt. Die Haube 42 kann schräg gestellt und/oder gekrümmt ausgebildet sein, um den austretenden Kraftstoff mit möglichst geringem Strömungswiderstand in den Staubehälter 14 umzulenken. Die Haube 42 kann einstückig am Bauteil 30 angeformt sein, das dabei einfach durch Spritzgießen oder Umformen herstellbar ist.

In den unteren, im Querschnitt vergrößerten Bereich der Steigleitung 32 ist zur Bildung der Strahlpumpe 22 eine Düse 44 eingesetzt, an die eine Treibleitung 46 angeschlossen ist. Zwischen der Düse 44 und dem Kanal 32 verbleibt ein Ringraum 48, der mit dem Vorratsbehälter 10 verbunden ist und durch den von dem aus der Düse 44 austretenden Treibstrahl Kraftstoff aus den Vorratsbehälter 10 mitgerissen wird, so daß dieser zusammen mit dem aus der Düse 44 austretenden Kraftstoff in die Steigleitung 32 gelangt und aus diesem in den Staubehälter 14 austritt.

Der Staubehälter 14 weist keine nach außen führende Öffnung auf und im Falle einer Undichtigkeit der Verbindung des Bauteils 30 mit der Umfangswand 18 des Staubehälters 14 kann es zu einer Entleerung des Staubehälters 14 kommen. Zwischen der Umfangswand 18 des Staubehälters 14 und dem Bauteil 30 ist daher kein separates Dichtelement erforderlich.

## Patentansprüche

1. Vorrichtung zum Fördern von Kraftstoff aus einem Vorratsbehälter zu einer Brennkraftmaschine mit einem im Vorratsbehälter (10) angeordneten Staubehälter (14), aus dem ein Förderaggregat (20) Kraftstoff ansaugt und zur Brennkraftmaschine (12) fördert, mit einer Strahlpumpe (22), durch die Kraftstoff aus dem Vorratsbehälter (10) in den Staubehälter (14) gefördert wird, wobei die Strahlpumpe (22) nahe einem Boden (16) des Staubehälters (14) angeordnet ist und in diesen durch eine bis in den Bereich des oberen Rands des Staubehälters (14) verlaufende Steigleitung (32) Kraftstoff fördert, **dadurch gekennzeichnet, daß** an der Außenseite einer Umfangswand (18) des Staubehälters (14) ein separates Bauteil (30) angeordnet ist, daß die Umfangswand (18) in ihrer Außenseite und/oder das Bauteil (30) in seiner der Umfangswand (18) zugewandten Seite eine offene Rinne (24;34) aufweist und daß das Bauteil (30) zur Abdeckung der offenen Rinne (24;34) und zur Bildung der Steigleitung (32) dicht mit der Umfangswand (18) verbunden ist.

2. Vorrichtung nach Anspruch 1, **dadurch gekennzeichnet, daß** am Bauteil (30) an seinem oberen Endbereich eine Umlenkvorrichtung (42) angeordnet ist, durch die aus der Steigleitung (32) austretender Kraftstoff in den Staubehälter (14) geleitet wird.

3. Vorrichtung nach Anspruch 2, **dadurch gekennzeichnet, daß** die Umlenkvorrichtung (42) einstückig mit dem Bauteil (30) ausgebildet ist.

4. Vorrichtung nach einem der Ansprüche 1 bis 3, **dadurch gekennzeichnet, daß** das Bauteil (30) mittels wenigstens einer Rastverbindung (36) an der Umfangswand (18) befestigbar ist.

5. Vorrichtung nach einem der Ansprüche 1 bis 3, **dadurch gekennzeichnet, daß** das Bauteil (30) mittels einer Schweißverbindung oder einer Klebeverbindung an der Umfangswand (18) befestigbar ist.

6. Vorrichtung nach einem der vorstehenden Ansprüche, **dadurch gekennzeichnet, daß** der Staubehälter (14) und das Bauteil (30) aus Kunststoff bestehen und durch Spritzgießen hergestellt sind.

## Claims

1. Apparatus for delivering fuel from a reservoir to an internal combustion engine, having a catchment vessel (14) which is arranged in the reservoir (10) and from which a delivery assembly (20) sucks fuel and delivers it to the internal combustion engine, having a jet pump (22) via which fuel is delivered from the reservoir (10) into the catchment vessel (14), the jet pump (22) being arranged near a bottom (16) of the catchment vessel (14). and conveying fuel into the latter through a riser (32) which extends up into the region of the upper edge of the catchment vessel (14), **characterized in that** a separate component (30) is arranged on the outer side of a circumferential wall (18) of the catchment vessel (14), **in that** the circumferential wall (18) has an open groove (24) in its outer side and/or the component (30) has a groove (34) in its side which faces the circumferential wall (18), and **in that** the component (30) is sealingly connected to the circumferential wall (18) in order to cover the open groove (24; 34) and to form the riser (32).

2. Apparatus according to Claim 1, **characterized in that** a diverting apparatus (42) is arranged on the component (30) on its upper end region, fuel which emerges from the riser (32) being led into the catchment vessel (14) by the said diverting apparatus (42).

3. Apparatus according to Claim 2, **characterized in that** the diverting apparatus (42) is configured in one piece with the component (30).

4. Apparatus according to one of Claims 1 to 3, **characterized in that** the component (30) can be fastened to the circumferential wall (18) by means of at least one latching connection (36).

5. Apparatus according to one of Claims 1 to 3, **characterized in that** the component (30) can be fastened to the circumferential wall (18) by means of a welded joint or an adhesively bonded join.

6. Apparatus according to one of the preceding claims, **characterized in that** the catchment vessel (14) and the component (30) are composed of plastic and are manufactured by injection moulding.

## Revendications

1. Dispositif d'alimentation de carburant à partir d'un réservoir de stockage vers un moteur à combustion interne, comportant un réservoir de retenue (14) disposé dans le réservoir de stockage (10), à partir duquel un module d'alimentation (20) aspire du carburant et l'achemine vers le moteur à combustion interne, comportant une pompe d'injection (22), par laquelle le carburant est acheminé à partir du réservoir de stockage (10) vers le réservoir de retenue (14), la pompe d'injection (22) étant disposée à proximité d'un fond (16) du réservoir de retenue (14) et acheminant du carburant dans celui-ci par une colonne montante (32) s'étendant jusque dans la zone du bord supérieur du réservoir de retenue ( 14),
**caractérisé en ce qu'**
un composant séparé (30) est disposé au niveau du côté extérieur d'une paroi périphérique (18) du réservoir de retenue (14), la paroi périphérique (18), sur son côté extérieur, et/ou le composant (30), sur son côté tourné vers la paroi périphérique (18), présente une rainure ouverte (24 ; 34), et le composant (30) est relié hermétiquement avec la paroi périphérique (18) pour recouvrir la rainure ouverte (24 ; 34) et pour former la colonne montante (32).

2. Dispositif selon la revendication 1,
**caractérisé en ce qu'**
au niveau de la zone d'extrémité supérieure du composant (30) est disposé un dispositif de déviation (42), qui dirige le carburant sortant de la colonne montante (32) dans le réservoir de retenue (14).

3. Dispositif selon la revendication 1,
**caractérisé en ce que**
le dispositif de déviation (42) est configuré d'une seule pièce avec le composant (30).

4. Dispositif selon l'une quelconque des revendications 1 à 3,
**caractérisé en ce que**
le composant (30) peut être fixé à la paroi périphérique (18) au moyen d'au moins une liaison par encliquetage.

5. Dispositif selon l'une quelconque des revendications 1 à 3,
**caractérisé en ce que**
le composant (30) peut être fixé à la paroi périphérique (18) au moyen d'une liaison par soudage ou par collage.

6. Dispositif selon l'une quelconque des revendications précédentes,
**caractérisé en ce que**
le réservoir de retenue (14) et le composant (30) sont en matière plastique et fabriqués par moulage par injection.
